# EUROPEAN PATENT APPLICATION

(11) **EP 4 435 628 A1**
(43) Date of publication of application: **25.09.2024**
(21) Application number: 23740097.3
(22) Date of filing: 13.01.2023
(51) Int. Cl.: G06F 16/735

(54) **OBJECT RECOMMENDATION METHOD AND APPARATUS, AND ELECTRONIC DEVICE**

(30) Priority: 14.01.2022 CN 202210045137
(71) Applicant: BEIJING YOUZHUJU NETWORK TECHNOLOGY CO. LTD., Beijing 101299 (CN)
(72) Inventor: NIU, Huizhen, Beijing 100086 (CN); WANG, Fengjiao, Beijing 100086 (CN)
(74) Representative: Dentons UK and Middle East LLP
(86) International application number: PCT/CN2023/072215
(87) International publication number: WO 2023/134756

(57) **Abstract**

Embodiments of the present disclosure provide an object recommendation method and apparatus, and an electronic device. The method comprises: playing back a target video; and when the target video satisfies a preset condition, displaying the recommendation information of a target object on the basis of a trigger operation for a comment control of the target video, the target object being an object associated with the target video.

## Description

### CROSS-REFERENCE TO RELATED APPLICATIONS

This application claims the priority of Chinese Patent Application No. 202210045137.3 entitled as "Object Recommending Method and Apparatus, and Electronic Device" and filed on January 14, 2022 with the Chinese Patent Office, the disclosure of which is incorporated herein by reference in its entirety.

### TECHNICAL FIELD

Embodiments of the present disclosure relate to a field of video play, and more particularly, to an object recommending method, an apparatus, and an electronic device.

### BACKGROUND

Object (resource) recommendation is gradually becoming more intelligent, for example, a resource application may recommend the resource of the interest to the user ; or if the user sees a resource of interest in another application, he can take a screenshot to find a similar resource in the resource application.

### SUMMARY

Embodiments of the present disclosure provide an object recommending method, an apparatus, and an electronic device.

In first aspect, an embodiment of the present disclosure provides an object recommending method, which includes: playing a target video; displaying a recommendation information of a target object based on a trigger operation of a comment control for the target video, in response to that the target video satisfies a preset condition; the target object being an object associated with the target video.

In second aspect, an embodiment of the present disclosure provides an object recommending method applied to a server, the method including: acquiring a recommendation information of a target object associated with a target video, in response to that the target video satisfies a preset condition; pushing a video data of the target video to a client; the video data of the target video including the recommendation information and a recommendation identifier, so that the client displays the recommendation information according to the recommendation identifier based on a trigger operation of a comment control for the target video when playing the target video; and the recommendation identifier being used for representing that the target video satisfies the preset condition.

In third aspect, an embodiment of the present disclosure provides an object recommending apparatus, including: a playing module configured to play a target video.

A display module, configured to display recommendation information of a target object based on a trigger operation of a comment control for the target video, in response to that the target video satisfies a preset condition; the target object being an object associated with the target video.

In fourth aspect, an embodiment of the present disclosure provides an object recommending apparatus, including: a processing module, configured to acquire recommendation information of a target object associated with the target video, in response to that the target video satisfies a preset condition;

A push module, configured to push a video data of the target video to a client; the video data of the target video including the recommendation information and a recommendation identifier, so that the client displays the recommendation information according to the recommendation identifier based on a trigger operation of a comment control for the target video when playing the target video; and the recommendation identifier being used for representing that the target video satisfies the preset condition.

In fifth aspect, an embodiment of the present disclosure provides an electronic device, including: a processor and a memory; wherein, the memory has computer execution instructions stored thereon; and the processor executes computer execution instructions stored in the memory to cause the processor to execute the object recommending method as described above in the first aspect and various possible designs of the first aspect.

In sixth aspect, an embodiment of the present disclosure provides a computer readable storage medium having computer execution instructions stored thereon; a processor, when executing the computer execution instructions, implements the object recommending method as described above in the first and second aspects.

In seventh aspect, an embodiment of the present disclosure provides a computer program product including computer instructions; the computer instructions, when executed by a processor, implement the object recommending method as described above in the first and second aspects.

In eighth aspect, an embodiment of the present disclosure provides a computer program, wherein, the computer program, when executed by a processor, implements the object recommending method as described above in the first and seconds aspects.

The object recommending method and apparatus, and the electronic device provided by this embodiment allow a user to operate on a video playing interface while watching a video in a video application, to further see recommendation information of a target object associated with the video.

### BRIEF DESCRIPTION OF THE DRAWINGS

In order to more clearly illustrate the technical solutions in the embodiments or prior art of the present disclosure, the following will briefly introduce the accompanying drawings that need to be used in the description of the embodiments or prior art, and it will be obvious that the accompanying drawings in the following description are some of the embodiments of the present disclosure, and that for those skilled in the field, other accompanying drawings can be obtained based on the accompanying drawings without any inventive work.
FIG. 1 is a schematic diagram of a scenario to which an embodiment of the present disclosure is applicable;
FIG. 2 is a schematic flow chart of an object recommending method provided by an embodiment of the present disclosure;
FIG. 3 is a schematic diagram of an interface of a client provided by an embodiment of the present disclosure;
FIG. 4 is another schematic diagram of an interface of a client provided by an embodiment of the present disclosure;
FIG. 5A is another schematic flow chart of an object recommending method provided by an embodiment of the present disclosure;
FIG. 5B is another schematic flow chart of an object recommending method provided by an embodiment of the present disclosure;
FIG. 6 is another schematic diagram of an interface of a client provided by an embodiment of the present disclosure;
FIG. 7 is another schematic diagram of an interface of a client provided by an embodiment of the present disclosure;
FIG. 8 is a structural block diagram of an object recommending apparatus provided by an embodiment of the present disclosure;
FIG. 9 is another structural block diagram of an object recommending apparatus provided by an embodiment of the present disclosure; and
FIG. 10 is a schematic structural diagram of an electronic device provided by an embodiment of the present disclosure.

### DETAILED DESCRIPTION

In order to make objects, technical details and advantages of the embodiments of the disclosure more apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

In a shopping application, a user may search for a similar item, for example, the user may enter a screenshot of the item in the shopping application, so that an interface of the shopping application displays a similar item of the item. However, in the method, the user has to take a screenshot in advance, which renders the operation complicated and inefficient.

At present, in a resource application, a user needs to take a screenshot to search for a similar resource, which also renders the method complicated and inefficient.

At present, more and more users record and share their lives through short videos, and the short videos become an important way for the users to acquire information. In a short video application, the user uploads his recorded short video, and other users may see the short video shared by the user on his own mobile phone. In order to solve the problem of low efficiency in recommending a similar object in the prior art, the object recommending method provided by the embodiments of the present disclosure can recommend the object for the user in a short video frequently used by the user, so there is no need for the user to take a screenshot in advance, thereby improving object recommendation efficiency.

Before introducing the object recommending method provided by the embodiment of the present disclosure, a process of the user watching a short video in a short video application will be illustrated in conjunction with a scenario below:

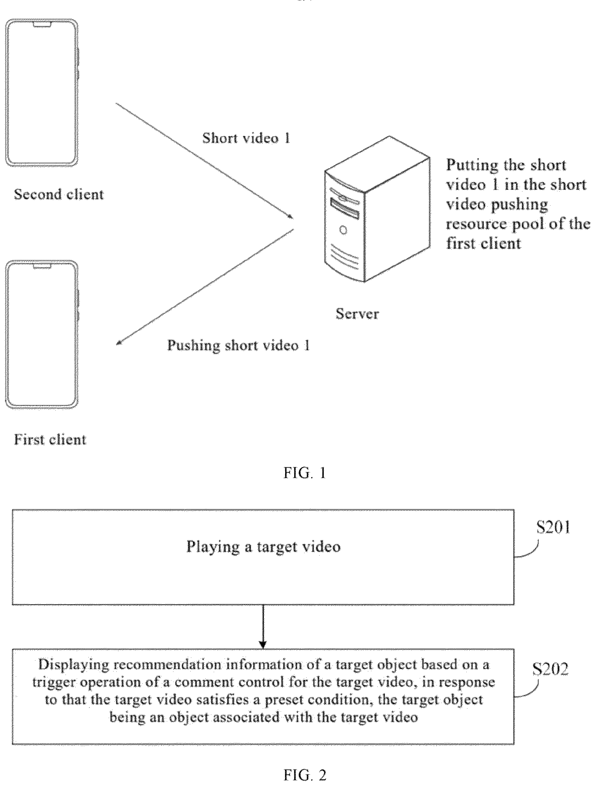

Referring to FIG. 1, the scenario includes: a first client, a server, and at least one second client. The second client is illustrated by way of example in FIG. 1 as one. The server is a server of a short video application. An example of a user seeing a video uploaded by a second client on a first client and the client is hosted in an electronic device is illustrated in FIG. 1.

Exemplarily, a second user to which the second client belongs uploads short video 1 in the short video application of the second client (i.e., the second client sends short video 1 to the server); after receiving short video 1, the server places short video 1 in a short video pushing resource pool of the first client (or other clients). The short video pushing resource pool of the first client includes: a plurality of short videos to be pushed to the first client.

It should be understood that an order in which the server pushes short videos from the short video pushing resource pool to the first client will not be limited in the embodiment of the present disclosure. The embodiment of the present disclosure focuses on that the server is capable of pushing the short video 1 to the first client. In this way, the first client can play the short video 1 after receiving it. It should be noted that in the case that the server sends the short video 1 to the first client, the server may send the first client the short video 1 alone, or the server may also send the first client a short video stream including a plurality of short videos among which the short video 1 is included. In this way, while the first user can browse (i.e., see) the short video 1 while watching the short video in the video application.

The object recommending method provided by the embodiment of the present disclosure is applied to the server and the client. In the following embodiment, the object recommending method provided by the embodiment of the present disclosure is illustrated by taking the process of pushing a target video (e.g., short video 1) from the server to the first client (referred to as the client in the following embodiments) as an example. It should be understood that the object recommending method according to the embodiment of the present disclosure may be applied to a video play scenario. The following embodiments will be illustrated by the example of the video as a short video, and may also be applied in other video play scenarios.

In one embodiment, the client is hosted in an electronic device, and the electronic device is a wireless terminal or a wired terminal. The wireless terminal may refer to a handheld device having a wireless connection function, or other processing device coupled to a wireless modem. The wireless terminal communicates with one or more core network devices through a Radio Access Network (RAN); the wireless terminal may be a mobile terminal, for example, a mobile phone (or referred to as a "cellular" phone) and a computer having a mobile terminal, for example, a portable, pocket, handheld, computer built-in, or vehicle-mounted mobile apparatus, which exchanges language and/or data with a Wireless Access Network. For another example, the wireless terminal may also be a device such as a Personal Communication Service (PCS) phone, a cordless phone, a Session Initiation Protocol (SIP) phone, a Wireless Local Loop (WLL) station, a Personal Digital Assistant (PDA), etc. The wireless terminal may also be referred to as a system, a Subscriber Unit, a Subscriber Station, a Mobile Station, a Mobile, a Remote Station, a Remote Terminal, an Access Terminal, a User Terminal, a User Agent, and a User Device or User Equipment, which will not be limited here. Optionally, the above-described terminal may also be a smartwatch, a tablet personal computer, a wearable device, etc. The electronic device will not be limited in the embodiments of the present disclosure. The following embodiments will be illustrated by taking the electronic device (the client) as a mobile phone.

Referring to FIG. 2, FIG. 2 is a schematic flow chart of an obj ect recommending method provided by an embodiment of the present disclosure. The method according to this embodiment is applied to the client (e.g., the first client) in FIG. 1, and the object recommending method includes:

S201: playing a target video.

The client plays the target video. Exemplarily, if the target video is video 1, the client receives the video 1 pushed from the server to the client, so as to play the video 1.

S202: displaying recommendation information of a target object based on a trigger operation of a comment control for the target video, in response to that the target video satisfies a preset condition, the target object being an object associated with the target video.

In the present disclosure, the recommendation information of the target object is displayed based on the trigger operation of the comment control for the target video, thereby facilitating the user to view the recommendation information of the target object, which, as compared with the existing mode of triggering the comment control to simply exhibit a comment information, enriches the video interacting mode and improves user experience.

In one embodiment, the preset condition is: the target video being a video of a preset type. Exemplarily, the preset type includes but is not limited to: a video of e-commerce type, a video of live broadcast room shopping type, a video of item recommendation type, etc. Exemplarily, when pushing the target video to the client, the server synchronizes the type of the target video with the client, so that the client determines the type of the target video and further determine whether the target video satisfies the preset condition.

In such embodiment, the target object is an object associated with the target video. Exemplarily, the target object is an object included in the target video. If the target video is a video of lipstick recommendation, then the target object is lipstick. In one embodiment, the object associated with the target video may be an object similar to the object included in the target video; and the term "similar to" may be understood as having a same use, having a same function, having similar appearance, or having a certain feature similar thereto.

In one embodiment, the preset condition includes at least one of: a comment information and/or a title information of the target video includes a text information associated with the target object; a video frame of the target video includes an image information corresponding to the target object; and an audio of the target video includes an audio information corresponding to the target object. Herein, the text information associated with the target object includes but is not limited to: the Chinese, English or colloquial name containing the target object; or a word having same or similar meaning to the target object, or a word representing a demand, etc. The image information corresponding to the target object includes but is not limited to: an image containing the target object, an image containing representations of the target object, etc. The audio information corresponding to the target object includes but is not limited to: an audio containing representations of the target object, or an audio containing the name of the target object.

Correspondingly, the target object is an object associated with the target video. In one embodiment, the target object is: an object associated with the text information included in the comment information and/or the title information of the target video; an object associated with the image information included in the video frame of the target video; or an object associated with the audio information included in the audio of the target video. Exemplarily, if the comment information of the target video includes the text information of "Requesting the color number of the lipstick", then the target object is the lipstick. If the title information of the target video includes the text information of "Recommending the lipstick for autumn season", then the target object is lipstick. For example, if the video frame of the target video includes an image of lipstick, then the target object is lipstick. If the audio of the target video includes the audio information of "lipstick", then the target object is lipstick.

In this embodiment, when pushing the target video to the client, the server pushes the target video, the audio of the target video, the comment information and the title information of the target video, etc., to the client. The client can detect whether the target video satisfies the preset condition according to at least one of the following: the target video, the audio of the target video, the comment information of the target video, and the title information of the target video.

Exemplarily, by way of example, the preset condition is the comment information of the target video including the text information associated with the target object, the client can detect whether the comment information of the target video includes the text information associated with the target object, to detect whether the target video satisfies the preset condition. Exemplarily, in a case where the target object is lipstick, if the comment information of the target video includes the name of lipstick, for example "Requesting the color number of the lipstick", or if the comment information of the target video includes a word of demands, for example, "Requesting the same style" or "Requesting the link", then the client determines that the target video satisfies the preset condition.

In one embodiment, the trigger operation of the comment control for the target video is an operation such as double click, long press, etc., for the comment control for the target video. In one embodiment, the recommendation information of the target object is contained in a similar object interface, and the client displays the similar object interface based on the trigger operation of the comment control for the target video. The similar object interface includes: the recommendation information of the target object. The recommendation information of the target object includes but is not limited to: image, seller information, price, delivering mode, payment mode, etc., of the target object.

In one embodiment, the target object includes but is not limited to: hats, apparel, jewelry, cosmetics, skincare products, plants, electronic products, etc. In one embodiment, the target object is a transferable (sellable) product.

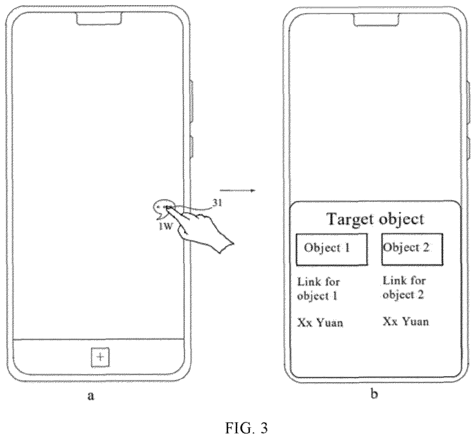

Exemplarily, FIG. 3 is a schematic diagram of an interface of a client provided by an embodiment of the present disclosure. Referring to diagram a of FIG. 3, the client plays short video 1, a first control 31 is displayed on a playing interface of short video 1, and the first control 31 may also be referred to as a comment control. The user clicks on the first control 31 so as to trigger the client to display a similar object interface. As shown in diagram b of FIG. 3, the similar object interface includes the recommendation information of the target object. By way of example, the lipstick is the target object associated with the target video, the recommendation information of lipstick in diagram b of FIG. 3 includes: an image of lipstick, a link of lipstick in an object database, and a price of lipstick. Diagram b of FIG. 3 is illustrated by taking that the target object includes an object 1 and an object 2 as an example.

In one embodiment, as shown in diagram b of FIG. 3, the similar object interface further includes a screenshot of the target video containing the lipstick. In one embodiment, the number of lipsticks contained in the object database is at least one, and diagram b of FIG. 3 is illustrated by taking that the target object includes the object 1 and the object 2 as an example.

Herein, the user may click on an image of the target object, or a link of the target object in the object database in diagram b of FIG. 3, so as to trigger the client to display a detailed selling page of the target object. The detailed selling page of the target object includes: price, seller, place of origin, video introduction, size and specifications, etc., of the target object. The detailed selling page of the target object will not be limited in the embodiment of the present disclosure; and the detailed selling page of the target object may be the same as the detailed selling page of the target object in the object database.

In the embodiment of the present disclosure, when the user browses (watches) short videos in a short video application, he/she may operate on the playing interface of the short video, and further see the recommendation information of the target object associated with the short video, so that the aim of watching the recommendation information while watching the short video is achieved, and the user doesn't need taking a screenshot of the object in advance, which has high recommendation efficiency, and is favorable for improving user experience.

In one embodiment, the playing interface of the target video includes a comment control; and the comment control is used for triggering the display of a comment panel. In one embodiment, the comment panel includes a second control 32; and the second control 32 is used for triggering the display of a similar object interface (the display of the recommendation information of the target object). In this way, the user may operate the second control 32 to trigger the client to display the similar object interface, that is to say, the client displays the recommendation information of the target object, in response to the first trigger operation of the user for the second control 32. Herein, the operation of the user for the first control includes but is not limited to click, slide, etc.

In one embodiment, the second control 32 is represented by "an obj ect identifier of the target object", for example, displaying text, images, etc., of target object lipstick on the comment panel. In one embodiment, the second control 32 is represented by a word "Good products recommendation".

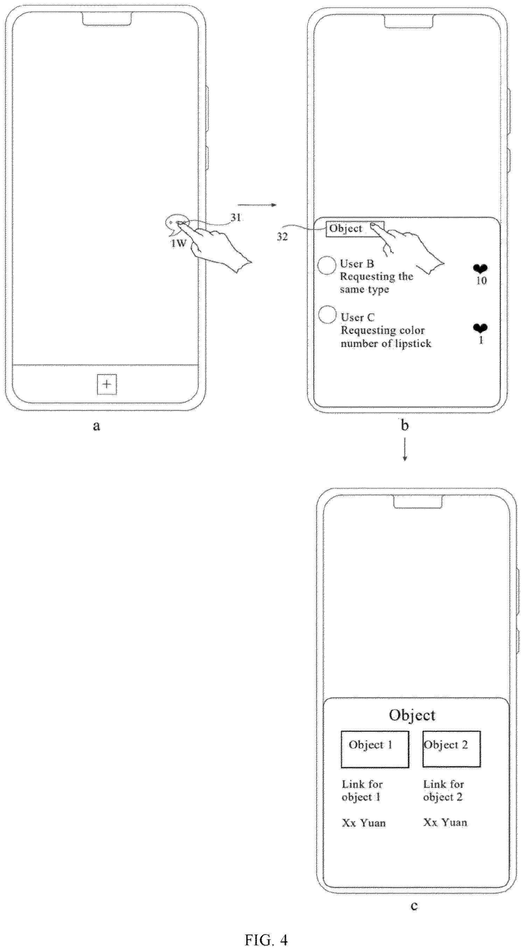

For example, referring to diagram a of FIG. 4, the client plays the short video 1; the first control 31 is displayed on the playing interface of short video 1; and the first control 31 may also be referred to as a comment control. The user clicks on first control 31 to trigger the client to display the comment panel for short video 1. Referring to diagram b of FIG. 4, the comment panel of the short video 1 includes a second control 32; the second control 32 may also be referred to as a similar object control; the user clicks on the second control 32 to trigger the client to display a similar object interface. The similar object interface is for example shown in diagram c of FIG. 4, and the introduction of the similar object interface may refer to the relevant description in diagram b of FIG. 3. It should be understood that FIG. 4 is illustrated by taking that the second control is represented by the object identifier "(object)" of the target object as an example.

In the embodiment of the present disclosure, the mode for triggering the recommendation information of the target object is more flexible.

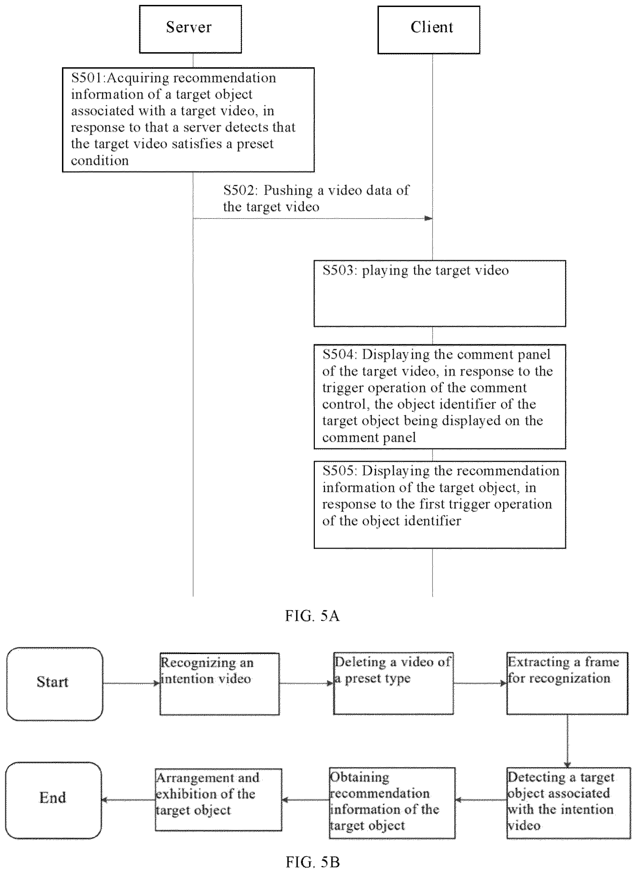

In one embodiment, the server pushes the same video to different clients; if the client executes an action of acquiring the recommendation information of the target object, the plurality of clients need to perform repeated calculations on the same video. In order to avoid the plurality of clients from performing repeated calculations on the same video and reduce computational workload of the clients so that the clients may better provide services to the users, in one embodiment, the object recommending method provided by the embodiment of the present disclosure can be completed through interaction between the server and the clients. Hereinafter, the object recommending method provided by the embodiment of the present disclosure will be illustrated from the perspective of interaction between the server and the clients, in conjunction with FIG. 5A.

Referring to FIG. 5A, the object recommending method provided by the embodiment of the present disclosure includes:

S501: acquiring recommendation information of a target object associated with a target video, in a case where a server detects that the target video satisfies a preset condition.

In one embodiment, the preset condition includes at least one of the following: a comment information and/or a title information of the target video includes a text information associated with the target object; a video frame of the target video includes an image information corresponding to the target object; and an audio of the target video includes an audio information corresponding to the target object.

Correspondingly, the server may determine whether the target video satisfies the preset condition according to at least one of: the comment information, the video frame image information, and the audio information of the target video. Herein, if the comment information and/or title information of the target video includes the text information associated with the target object, or the video frame of the target video includes the image information corresponding to the target object, or the audio of the target video includes the audio information corresponding to the target object, it can be determined that the target video satisfies the preset condition, and the relevant description of the client determining whether the target video satisfies the preset condition in the above-described S202 may be referred to.

In one embodiment, the server detects whether the target video satisfies the preset condition in at least one of modes below:

First mode: the server searches for a first keyword in the comment information of the target video, to detect whether the target video satisfies the preset condition. The comment information of the target video includes user's ideas and opinions on the target video. Exemplarily, the first keyword includes but is not limited to: information representing that the user wants to acquire the target object associated with the target video, such as "Requesting the same style", "Requesting the link", etc. Thus, the server may search for the first keyword such as "Requesting the same style", "Requesting the link", etc., in the comment information of the target video, to detect whether the target video satisfies the preset condition. Herein, if the comments of the target video contain the first keyword such as "Requesting the same style", "Requesting the link", etc., then the server determines that the target video satisfies the preset condition.

In one embodiment, the first keyword includes but is not limited to the name of the target object. For example, the comment information of the target video includes: the color of the "lipstick" is really beautiful, or what's the color number of the "lipstick". In this way, the first keyword may be the name of the target object: "lipstick". Thus, the server searches for the first keyword "lipstick" in the comment information of the target video to detect whether the target video satisfies the preset condition. Herein, if the comments of the target video contain the first keyword "lipstick", the server determines that the target video satisfies the preset condition, and the target object associated with the target video is lipstick. It should be understood that the first keyword may be preset, and the name of the target object contains names of all objects in the object database, so the name appearing in the first keyword is the target object in the target video.

Second mode: the server searches for a second keyword in the title information of the target video to detect whether the target video satisfies the preset condition; and the second keyword is used for representing the target object.

When a publisher of the target video shares the target video, he/she may add title information to the target video, for example, "Publicity of the lipstick for autumn season", so the server searches for the second keyword in the title information of the target video to detect whether the target video satisfies the preset condition. In this embodiment, exemplarily, if the server finds out the second keyword "lipstick" in the title information of the target video, the server determines that the target video contains the target object "lipstick".

Third mode: the server searches for a target object in the video frame of the target video to detect whether the target video satisfies the preset condition.

The server may compare similarity between the video frame and a preset image, in the video frame of the target video, to detect whether the target video contains the target object, and further detect whether the target video satisfies the preset condition. It should be understood that the preset image is an image containing a preset object. In one embodiment, the preset object is an object contained in the object database. Herein, if the video frame of the target video contains the target object, then the target video satisfies the preset condition.

Herein, the server extracts frames from the target video, for example, extracts one video frame for every other one second, and further acquires similarity between each video frame and each preset image; and then takes an object having similarity greater than a similarity threshold in the preset image as the object contained in the corresponding video frame. Exemplarily, if the similarity between one video frame in the target video and the preset image of "lipstick" is greater than the similarity threshold, then the server determines that the video frame contains the object "lipstick"; if the similarity between another video frame in the target video and the preset image of "mobile phone" is greater than the similarity threshold, then the server determines that the video frame contains the object "mobile phone". It should be understood that the number of target objects in the target video (target objects associated with the target video) may be at least one, for example, the target object may be lipstick or mobile phone.

In one embodiment, a neural network model is pre-built in the server; the neural network model is configured to acquire similarity between images; the neural network model is trained based on a large number of images; and the process of training the neural network model will not be repeated in the embodiment of the present disclosure, for which relevant descriptions of existing neural network models may be referred to.

Fourth mode: the server searches for a preset audio in the audio corresponding to the target video, to detect whether the target video satisfies the preset condition; and the preset audio is used for representing the target object.

A publisher of the target video will also record corresponding audio, such as the product introduction or background music, at the same time as shooting the target video. Thus, in the embodiment of the present disclosure, the server searches for the preset audio in the audio corresponding to the target video, to detect whether the target video satisfies the preset condition. Herein, the preset audio may be the name of the target object. For example, if the target object is "lipstick", then the server may search for an audio containing "lipstick" in the audio corresponding to the target video; if the audio containing "lipstick" in the audio corresponding to the target video is found, the server determines that the target video includes the target object "lipstick", that is, the target video satisfies the preset condition.

In one embodiment, the server adopts any one of the above modes to detect whether the target video satisfies the preset condition; or in one embodiment, the server adopts at least two of the above modes to detect whether the target video satisfies the preset condition.

In response to that the target video satisfies the preset condition, the server may acquire the recommendation information of the target object associated with the target video. In one embodiment, the server acquires the recommendation information of the target object in the object database.

The database contains information of at least one object; in one embodiment, the information of the object includes name, card image, link in the database, and price of the object, etc. It should be understood that the card image of the object is preset and contains the image of the object. In the embodiment of the present disclosure, if the server detects that the target video satisfies the preset condition, the server acquires the recommendation information of the target object in the object database; exemplarily, if the target object is lipstick, then the server takes the information of lipstick in the object database as the recommendation information of the target object. Exemplarily, if the target object is a lipstick with No. 1 color, then the server takes the information of the lipstick with No. 1 color in the object database as the recommendation information of the target object.

In one embodiment, the target video satisfying the preset condition may be referred to as an intention video.

S502: pushing, by the server, a video data of the target video to the client.

Correspondingly, the client receives the video data of the target video from the server.

Herein, the video data of the target video includes: the recommendation information and a recommendation identifier of the target object. The recommendation identifier is used for representing that the target video satisfies the preset condition. In one embodiment, the video data of the target video further includes: video stream of the target video, audio stream corresponding to the target video, comment information, etc.

In one embodiment, the recommendation information of the target object includes: at least one resource corresponding to the target object, and a resource icon of the resource. Herein, the resource icon may be an image of the target object stored in the object database, and the resource may be information such as sales link of the target object stored in the object database. In one embodiment, the resource icon may be represented in a form of card image; and the resource may be represented in a form of link in the object database.

In one embodiment, the target object is a plurality of objects associated with the target video; and the plurality of objects are objects respectively associated with a plurality of video frames of the target video. For example, a first video frame of the target video includes lipstick; and a second video frame of the target video includes a mobile phone. Correspondingly, in this embodiment, the video data of the target video further includes: arrangement order of objects.

In one embodiment, if the target object includes at least two objects, the server furthers acquire an arrangement order of the at least two objects, to add the arrangement order of the at least two objects into the video data of the target video, so that the client displays the similar object interface (the recommendation information of the target object) based on the arrangement order of the at least two objects. The arrangement order of objects is related to recommendation levels of objects in the target video. Recommendation level may be understood as a recommendation degree of an object by the target video. Exemplarily, if the target video mainly recommends the lipstick and only briefly mentions mobile phone, a recommendation level of lipstick in the target video is higher than a recommendation level of the mobile phone. Correspondingly, the lipstick is arranged in front of mobile phone.

The mode of the server acquiring the arrangement order of at least two objects will be described below:
In one embodiment, the server determines an arrangement order of at least two objects according to a parameter. Herein, the parameter is related to a recommendation level of an object in the target video; and the parameter includes at least one of: the number of text information associated with the target object contained in the comment information and/or contained in the title information of the target video, the number of image information corresponding to the target object included in the video frame of the target video, and the number of audio information corresponding to the target object included in the audio of the target video.

In a scenario where the server determines the arrangement order of the at least two objects according to "the number of times", the server takes an order of the numbers from the most to the least as the arrangement order of the at least two objects, no matter whether the number of text information associated with the target object contained in the comment information of the target video, or the number of text information associated with the target object contained in the title information of the target video, or the number of image information corresponding to the target object contained in the video frame of the target video, or the number of audio information corresponding to the target object contained in the audio of the target video.

Exemplarily, if the target object includes a lipstick and a mobile phone, the comments of the target video includes "Requesting the color number of the lipstick", or "Requesting the model of the mobile phone", etc. In the embodiment of the present disclosure, the server may take an order of the number of text information associated with lipstick included in the comment information of the target video and the number of text information associated with mobile phone included in the comment information of the target video from the most to the least as the arrangement order of lipstick and mobile phone. If the number of text information associated with lipstick is greater than the number of text information associated with the mobile phone, the arrangement order may be: the lipstick first, and then the mobile phone.

S503: playing, by the client, the target video.

S504: displaying, by the client, the comment panel of the target video, in response to the trigger operation of the comment control, the object identifier of the target object being displayed on the comment panel.

S505: displaying, by the client, the recommendation information of the target object, in response to the first trigger operation of the object identifier.

In this way, the comment information of the video and the object identifier of the target object associated with the video are simultaneously displayed on the comment panel, which facilitates the user to trigger the object identifier of the target object while viewing the comments, and to view the recommendation information of the target object. The object identifier may be obtained according to the image of the target object in the video picture of the target video.

The relevant descriptions in FIG. 2 to FIG. 4 may be referred to for S503 to S505.

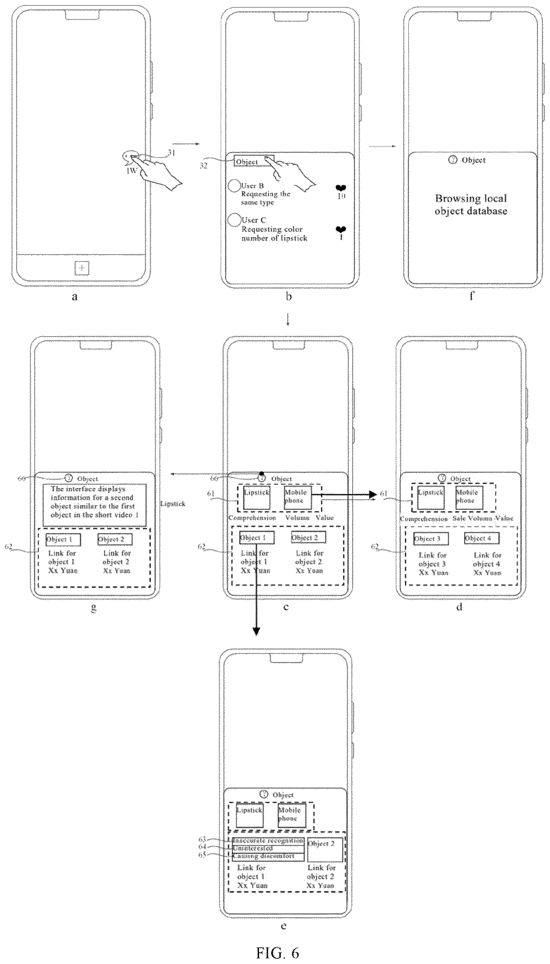

The above-mentioned FIG. 3 and FIG. 4 illustrate an example of the similar object interface (information of the target object) provided by the embodiment of the present disclosure. In one embodiment, referring to diagram c of FIG. 6, the similar object interface includes: a first display region 61 and a second display region 62. Herein, the first display region 61 displays an object identifier, and the second display region 62 displays recommendation information of the target object. It should be understood that FIG. 6 is illustrated by taking at least two objects associated with the target video as an example. It should be understood that diagram a and diagram b of FIG. 6 are respectively the same as diagram a and diagram b of FIG. 4, and the relevant description in FIG. 4 may be referred to for diagram a and diagram b of FIG. 6.

In one embodiment, the target object is a plurality of objects associated with the target video. Correspondingly, the video data of the target video further includes: arrangement order of at least two objects. In the embodiment of the present disclosure, the client displays at least two object identifiers in the first display region according to the arrangement order of the at least two objects, and display, in the second display region, the recommendation information of the object which is arranged in the first place of the arrangement order.

In one embodiment, the object identifier is a screenshot image of the target object in the target video; and the recommendation information of the target object includes: card image of the target object, and link of the target object in the object database. In other words, the recommendation information of the target object includes: at least one resource of the target object in the object database (e.g., a local database), and resource icon. The resource icon may be a product image corresponding to the object identifier determined according to the object identifier, for example, an image provided by a seller for exhibiting the product.

Taking that the at least two objects include a lipstick and a mobile phone as an example, in the arrangement order, the lipstick is in the first place and the mobile phone is in the second place. Correspondingly, referring to diagram c of FIG. 6, the client displays a screenshot image of lipstick in the target video and a screenshot image of mobile phone in the target video in the first display region 61 according to the arrangement order. The client may further display resource (e.g., product link) and resource icon (e.g., product card image), price (represented in Xx Yuan), etc. of lipstick in the object database in the second display region 62. It should be understood that in FIG. 6, the screenshot image and the card image corresponding to the object are represented by the name of the object. Herein, FIG. 6 is illustrated by taking the target object as lipstick 1 and lipstick 2.

In one embodiment, the user clicks on any object identifier, so as to trigger the client to display the recommendation information of the target object corresponding to the object identifier. That is to say, the client displays the recommendation information of the target object corresponding to the object identifier in the second display region, in response to the operation performed by the user on the target object identifier in the first display region. Exemplarily, referring to diagram d of FIG. 6, after the user clicks on the screenshot image of the mobile phone, the client displays recommendation information of object 3 and object 4 (object 3 and object 4 represent mobile phone) in the second display region.

In one embodiment, the user operates the card image of the target object, so as to provide feedback to the client. Correspondingly, for example, the client displays a feedback interface for the target card image, in response to the operation performed by the user on the target card image. In other words, the user may operates on any one resource icon, so as to trigger the client to display the feedback interface for the resource corresponding to the any one resource icon.

In one embodiment, the feedback interface includes at least one control as follows: an "Inaccurate recognition" control, an "Uninterested" control, and an "Image causes discomfort" control. The User may operate any control to provide feedback to the client. Herein, the operation performed by the user on the target card image may be long pressing the target card image. It should be understood that the target card image may be a card image of any target object.

Exemplarily, in response to the user long pressing the card image of lipstick 1, the client displays a feedback interface of the resource of object 1. In one embodiment, referring to diagram e of FIG. 6, the feedback interface is displayed above the target card image, herein, the feedback interface includes at least one of controls as follows: an "Inaccurate recognition" control 63, an "Uninterested" control 64, and an "Image causes discomfort" control 65. Herein, the user may operate any control to feedback opinions on the target card image to the client, in order to increase accuracy of subsequent recommendation and improve user experience.

In one embodiment, referring to diagram c of FIG. 6, the similar object interface further includes: controls for arranging a display order of target objects, for example, sales volume control, price control, and comprehensive control, etc.; the user may operate one of the controls, so that the client displays resource icons and resources of target objects in a corresponding order. In this embodiment, the video data of the target video includes sales volume, price, and comprehensive evaluation of each target object, furthermore, the client determines sales order, price order, and comprehensive order, etc. of the target objects according to the video data of the target video.

In one embodiment, after sending the video data of the target video to the client, the server further updates timely sales information of the target objects to the client, according to the sales information of the respective target objects in the object database. If both object 1 and object 2 have been sold out in the object database, the server sends sales information including "object 1 and object 2 have 0 remaining stocks" to the client. Correspondingly, after receiving the sales information, the client displays an interface as shown in diagram f of FIG. 6, in response to the user clicking on the second control 32. Herein, the interface does not include the recommendation information of the target object, but displays prompt information: "Go check the object database". It should be understood that one of diagram f of FIG. 6 and diagram c of FIG. 6 are selected for display.

In one embodiment, referring to diagram c of FIG. 6, the similar object interface further includes: a function control 66; and the function control 66 is configured to trigger the client to display illustration of the similar object interface. Exemplarily, referring to diagram g of FIG. 6, when the user clicks on the function control 66, the client displays illustration such as "The interface displays recommendation information of the target object associated with the short video 1".

In one embodiment, when detecting that the target video satisfies the preset condition, the server further detects whether target video is a video of a preset type, herein, the video of the preset type refers to: a video including illegal content, or the video of the preset type may be understood as content including a preset keyword. Herein, the content including a preset keyword may be understood as follows: the video includes a video frame including preset text or image, or an audio corresponding to the video includes a preset audio.

In this embodiment, the above-described S501 may be replaced with S501A: acquiring the recommendation information of the target object associated with the target video, in a case where the target video satisfies the preset condition and the target video is a video of a non-preset type. It should be understood that S501A is not shown in FIG. 5A. In this embodiment, the process shown in FIG. 5A may be simplified to that shown in FIG. 5B. It should be understood that FIG. 5B is illustrated by taking extracting frames from the target video and recognizing the target object associated with the target video in the video frame as an example.

In the embodiment of the present disclosure, the client displays, on the similar object interface, at least one object identifier in the target video and recommendation information of each target object, which further allows the user to acquire a similar object while watching the video, and thus renders a high efficiency. In addition, the client according to the embodiment of the present disclosure further provides various functions for the user to operate, for example, functions such as feedback, and illustration of the similar object interface, etc., which can improve user experience. In addition, the server may further push sales information of the target object to the client in real time, to facilitate the client to timely update and display relevant information of the target object.

In one embodiment, the client further provides a function for the user to recommend the target object associated with the target video to other users, so that when the user wants to recommend an object to other users, he/she may share efficiently.

In this embodiment, the client displays an interface to be shared with other users, in response to the second trigger operation by the user on the second control 32. Herein, the second trigger operation is different from the first trigger operation. Exemplarily, the first trigger operation may be a click, and the second trigger operation may be a double click or a long press, etc. The user selects, on the interface of the user to be shared, a target user with whom to share; correspondingly, the client pushes the video data of the target video to a terminal of the target user with whom to share, in response to a select operation performed by the user on the target user to be shared.

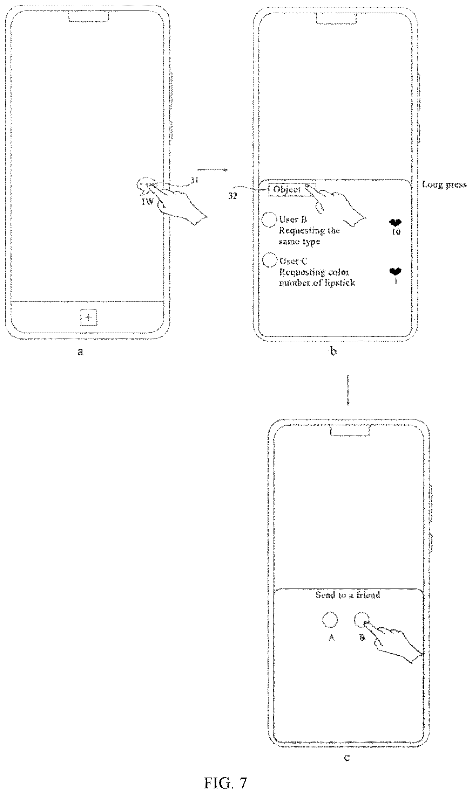

Exemplarily, referring to diagram b of FIG. 7, if the user long presses the second control 32, then the client displays the interface of user to be shared. The interface of user to be shared includes at least one identifier of the user with whom to share. The diagram c of FIG. 7 is illustrated by taking at least one user as user A and user B. In one embodiment, the at least one user with whom to share is a friend of the user or a concern user. Herein, the user may click on an identifier of a user B so as to trigger the client to send the video data of the target video to a client corresponding to the user B. In this way, the client of the user B displays a similar object interface. Herein, the identifier of the user may be avatar, name, etc., of the user. The diagram c of FIG. 7 is illustrated by taking the name of the user as an example. It should be understood that diagram a and diagram b of FIG. 7 are respectively the same as diagram a and diagram b of FIG. 4; and the relevant description in FIG. 4 may be referred to for diagram a and diagram b of FIG. 7.

In one embodiment, for example, the user further operates the resource icon of the target object, so as to trigger the client to send the video data of the target video to other clients. Exemplarily, the user may double click or triple click on the resource icon of the target object, so as to trigger the client to send the video data of the target video to other clients.

In the embodiment of the present disclosure, the user further shares the similar object interface with other users, which further allows the user to quickly recommend the target object associated with the target video to other users, resulting in good user experience.

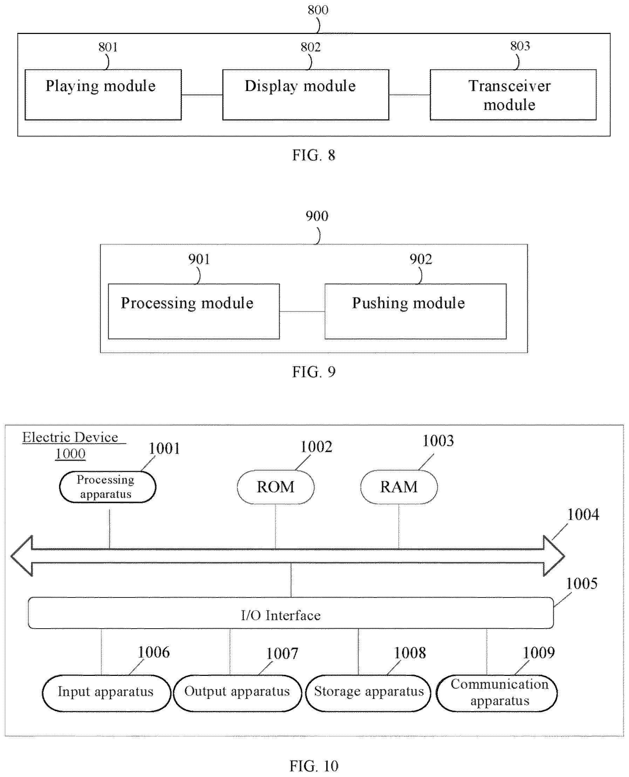

Referring to FIG. 8, FIG. 8 is a structural block diagram of an object recommending apparatus provided by an embodiment of the present disclosure. The object recommending apparatus may be a client; and for convenience of illustration, only parts related to the embodiments of the present disclosure are shown. Referring to FIG. 8, the object recommending apparatus 800 includes: a playing module 801, a display module 802, and a transceiver module 803. Herein,

The playing module 801 is configured to play a target video.

The display module 802 is configured to display recommendation information of a target object, based on a trigger operation of a comment control for the target video, in response to that the target video satisfies a preset condition; the target object is an object associated with the target video.

In one possible implementation, the display module 802 is specifically configured to display a comment panel of the target video, in response to the trigger operation of the comment control, the comment panel displaying the object identifier of the target object; and display the recommendation information of the target object, in response to a first trigger operation of the object identifier.

In one possible implementation, the preset condition includes at least one of: a comment information and/or a title information of the target video includes a text information associated with the target object, a video frame of the target video includes an image information corresponding to the target object, and an audio of the target video includes audio information corresponding to the target object.

In one possible implementation, the transceiver module 803 is configured to receive a video data of the target video from a server; the video data of the target video including recommendation information and a recommendation identifier of the target object, the recommendation identifier being used for representing that the target video satisfies the preset condition.

In one possible implementation, the target object is a plurality of objects associated with the target video; and the plurality of objects are objects respectively associated with a plurality of video frames of the target video.

In one possible implementation, the recommendation information of the target object includes a resource icon of at least one resource corresponding to the target object. The display module 802 is further configured to display a feedback interface for the resource, in response to a trigger operation by the user on any one resource icon.

In one possible implementation, the display module 802 is further configured to display an interface of user to be shared, in response to a second trigger operation on the object identifier, the second trigger operation being different from the first trigger operation.

The transceiver module 803 is further configured to push the video data of the target video to a client of the target user with whom to share, in response to a select operation on the target user with whom to share.

In one possible implementation, the display module 802 is specifically configured to display the recommendation information of the target object based on the trigger operation of the comment control for the target video, in response to the video data of the target video including the recommendation identifier.

Referring to FIG. 9, FIG. 9 is another structural block diagram of the object recommending apparatus provided by the embodiment of the present disclosure. The object recommending apparatus may be a server; for convenience of illustration, only parts related to the embodiment of the present disclosure are shown. Referring to FIG. 9, the object recommending apparatus 900 includes a processing module 901 and a push module 902. Herein,

The processing module 901 is configured to acquire the recommendation information of the target object associated with the target video, in response to that the target video satisfies the preset condition;

The push module 902 is configured to push the video data of the target video to the client; the video data of the target video including the recommendation information and a recommendation identifier, so that the client displays the recommendation information according to the recommendation identifier based on the trigger operation of the comment control for the target video when playing the target video; and the recommendation identifier being used for representing that the target video satisfies the preset condition.

In one possible implementation, the processing module 901 is specifically configured to determine whether the target video satisfies the preset condition according to at least one of: the comment information, the title information, the video frame image information, and the audio information of the target video.

In one possible implementation, the processing module 901 is specifically configured to determine that the target video satisfies the preset condition, in a case where: a comment information and/or title information of the target video includes text information associated with the target object, or a video frame of the target video includes an image information corresponding to the target object, or an audio of the target video includes an audio information corresponding to the target object.

The object recommending apparatus provided by the embodiment of the present disclosure may be used to execute the technical solution of the above-described method embodiment, and has similar implementation principle and technical effect; thus, no details will be repeated here in this embodiment.

In order to implement the above-described embodiments, an embodiment of the present disclosure further provides an electronic device.

Referring to FIG. 10, FIG. 10 shows a schematic structural diagram of an electronic device suitable for implementing the embodiment of the present disclosure; and the electronic device 1000 may be the client or the server according to the above-described embodiment. The electronic device shown in FIG. 10 is only an example and should not impose any limitation on functions and range of use of the embodiment of the present disclosure.

As illustrated in FIG. 10, the electronic device 1000 may include a processing apparatus 1001 (e.g., a central processing unit, a graphics processing unit, etc.), which can perform various suitable actions and processing according to a program stored in a read-only memory (ROM) 1002 or a program loaded from a storage apparatus 1008 into a random-access memory (RAM) 1003. The RAM 1003 further stores various programs and data required for operations of the electronic device 1000. The processing apparatus 1001, the ROM 1002, and the RAM 1003 are interconnected by means of a bus 1004. An input/output (I/O) interface 1005 is also connected to the bus 1004.

Usually, the following apparatus may be connected to the I/O interface 1005: an input apparatus 1006 including, for example, a touch screen, a touch pad, a keyboard, a mouse, a camera, a microphone, an accelerometer, a gyroscope, or the like; an output apparatus 1007 including, for example, a liquid crystal display (LCD), a loudspeaker, a vibrator, or the like; a storage apparatus 1008 including, for example, a magnetic tape, a hard disk, or the like; and a communication apparatus 1009. The communication apparatus 1009 may allow the electronic device 1000 to be in wireless or wired communication with other devices to exchange data. While FIG. 10 illustrates the electronic device 1000 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1009 and installed, or may be installed from the storage apparatus 1008, or may be installed from the ROM 1002. When the computer program is executed by the processing apparatus 1001, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to execute the method of the above-mentioned embodiments.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

In a first aspect, according to one or more embodiments of the present disclosure, there is provided an object recommending method, which includes: playing a target video; displaying a recommendation information of a target object based on a trigger operation of a comment control for the target video, in response to that the target video satisfies a preset condition; the target object being an object associated with the target video.

According to one or more embodiments of the present disclosure, the displaying a recommendation information of a target object based on a trigger operation of a comment control for the target video, includes: displaying a comment panel of the target video in response to the trigger operation of the comment control, the comment panel displaying an object identifier of the target object; and displaying the recommendation information of the target object in response to a first trigger operation of the object identifier.

According to one or more embodiments of the present disclosure, the preset condition includes at least one of: a comment information and/or a title information of the target video includes a text information associated with the target object, a video frame of the target video includes an image information corresponding to the target object, and an audio of the target video includes an audio information corresponding to the target object.

According to one or more embodiments of the present disclosure, before the playing a target video, the method further includes: receiving a video data of the target video from a server; the video data of the target video including the recommendation information and a recommendation identifier of the target object, and the recommendation identifier being used for representing that the target video satisfies the preset condition.

According to one or more embodiments of the present disclosure, the target object is a plurality of objects associated with the target video, and the plurality of objects are objects respectively associated with a plurality of video frames of the target video.

According to one or more embodiments of the present disclosure, the recommendation information of the target object includes a resource icon of at least one resource corresponding to the target object; and the method further includes: displaying a feedback interface for the resource, in response to a trigger operation on any one resource icon.

According to one or more embodiments of the present disclosure, the method further includes: displaying an interface of user to be shared, in response to a second trigger operation of the object identifier; the second trigger operation being different from the first trigger operation; pushing the video data of the target video to a client of a target user with whom to share, in response to a select operation on the target user with whom to share.

According to one or more embodiments of the present disclosure, the displaying a recommendation information of a target object based on a trigger operation of a comment control for the target video, in response to that the target video satisfies a preset condition, includes: displaying the recommendation information of the target object based on the trigger operation of the comment control for the target video, in response to that the video data of the target video includes the recommendation identifier.

In a second aspect, according to one or more embodiments of the present disclosure, there is provided an object recommending method applied to a server, the method including: acquiring a recommendation information of a target object associated with a target video, in response to that the target video satisfies a preset condition; pushing a video data of the target video to a client; the video data of the target video including the recommendation information and a recommendation identifier, so that the client displays the recommendation information according to the recommendation identifier based on a trigger operation of a comment control for the target video when playing the target video; and the recommendation identifier being used for representing that the target video satisfies the preset condition.

According to one or more embodiments of the present disclosure, the method further includes: determining whether the target video satisfies the preset condition according to at least one of: a comment information, a title information, a video frame image information, and an audio information of the target video.

According to one or more embodiments of the present disclosure, the determining whether the target video satisfies the preset condition according to at least one of: a comment information, a title information, a video frame image information, and an audio information of the target video, includes: determining that the target video satisfies the preset condition, if: a comment information and/or a title information of the target video includes a text information associated with the target object, a video frame of the target video includes an image information corresponding to the target object, or an audio of the target video includes an audio information corresponding to the target object.

In a third aspect, according to one or more embodiments of the present disclosure, there is provided an object recommending apparatus, including: a playing module configured to play a target video.

A display module, configured to display recommendation information of a target object based on a trigger operation of a comment control for the target video, in response to that the target video satisfies a preset condition; the target object being an object associated with the target video.

According to one or more embodiments of the present disclosure, the display module is specifically configured to display a comment panel of the target video in response to a trigger operation of the comment control, the comment panel displaying an object identifier of the target object; and display the recommendation information of the target object in response to a first trigger operation of the object identifier.

According to one or more embodiments of the present disclosure, the preset condition includes at least one of: a comment information and/or a title information of the target video comprises a text information associated with the target object, a video frame of the target video comprises an image information corresponding to the target object, and an audio of the target video comprises an audio information corresponding to the target object.

According to one or more embodiments of the present disclosure, the transceiver module is configured to receive a video data of the target video from a server; the video data of the target video including the recommendation information and a recommendation identifier of the target object; and the recommendation identifier being used for representing that the target video satisfies the preset condition.

According to one or more embodiments of the present disclosure, the target object is a plurality of objects associated with the target video; and the plurality of objects are objects respectively associated with a plurality of video frames of the target video.

According to one or more embodiments of the present disclosure, the recommendation information of the target object includes a resource icon of at least one resource corresponding to the target object. The display module is further configured to display a feedback interface for the resource, in response to a trigger operation by the user on any one resource icon.

According to one or more embodiments of the present disclosure, the display module is further configured to display an interface of user to be shared, in response to a second trigger operation of the object identifier; the second trigger operation being different from the first trigger operation.

The transceiver module is further configured to push the video data of the target video to a client of a target user with whom to share, in response to a select operation on the target user with whom to share.

According to one or more embodiments of the present disclosure, the display module is specifically configured to display the recommendation information of the target object based on a trigger operation of the comment control for the target video, in response to that the video data of the target video includes the recommendation identifier.

In a fourth aspect, according to one or more embodiments of the present disclosure, there is provided an object recommending apparatus, including:

A processing module, configured to acquire recommendation information of a target object associated with the target video, in response to that the target video satisfies a preset condition;

A push module, configured to push a video data of the target video to a client; the video data of the target video including the recommendation information and a recommendation identifier, so that the client displays the recommendation information according to the recommendation identifier based on a trigger operation of a comment control for the target video when playing the target video; and the recommendation identifier being used for representing that the target video satisfies the preset condition.

According to one or more embodiments of the present disclosure, the processing module is specifically configured to determine whether the target video satisfies the preset condition according to at least one of: a comment information, a title information, a video frame image information, and an audio information of the target video.

According to one or more embodiments of the present disclosure, the processing module is specifically configured to determine that the target video satisfies the preset condition, if: a comment information and/or a title information of the target video comprises a text information associated with the target object, a video frame of the target video comprises an image information corresponding to the target object, or an audio of the target video comprises an audio information corresponding to the target object..

In a fifth aspect, according to one or more embodiments of the present disclosure, there is provided an electronic device, including: a processor and a memory; wherein, the memory has computer execution instructions stored thereon; and the processor executes computer execution instructions stored in the memory to cause the processor to execute the object recommending method as described above in the first aspect and various possible designs of the first aspect.

In a sixth aspect, according to one or more embodiments of the present disclosure, there is provided a computer readable storage medium having computer execution instructions stored thereon; a processor, when executing the computer execution instructions, implements the object recommending method as described above in the first aspect and various possible designs of the first aspect.

In a seventh aspect, according to one or more embodiments of the present disclosure, there is provided a computer program product including computer instructions; the computer instructions, when executed by a processor, implement the object recommending method as described above in the first aspect and various possible designs of the first aspect.

In an eighth aspect, according to one or more embodiments of the present disclosure, there is provided a computer program, wherein, the computer program, when executed by a processor, implements the object recommending method as described above in the first aspect and various possible designs of the first aspect.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. An object recommending method applied to a client, the method comprising:
playing a target video;
displaying a recommendation information of a target object based on a trigger operation of a comment control for the target video, in response to that the target video satisfies a preset condition; the target object being an object associated with the target video.

2. The method according to claim 1, wherein, the displaying a recommendation information of a target object based on a trigger operation of a comment control for the target video, comprises:
displaying a comment panel of the target video in response to the trigger operation of the comment control, the comment panel displaying an object identifier of the target object; and
displaying the recommendation information of the target object in response to a first trigger operation of the object identifier.

3. The method according to claim 2, wherein, the preset condition comprises at least one of: a comment information and/or a title information of the target video comprises a text information associated with the target object, a video frame of the target video comprises an image information corresponding to the target object, and an audio of the target video comprises an audio information corresponding to the target object.

4. The method according to claim 2 or 3, wherein, before the playing a target video, the method further comprises:
receiving a video data of the target video from a server; the video data of the target video comprising the recommendation information and a recommendation identifier of the target object, and the recommendation identifier being used for representing that the target video satisfies the preset condition.

5. The method according to any one of claims 1 to 4, wherein, the target object is a plurality of objects associated with the target video, and the plurality of objects are objects respectively associated with a plurality of video frames of the target video.

6. The method according to any one of claims 1 to 5, wherein, the recommendation information of the target object comprises a resource icon of at least one resource corresponding to the target object; and the method further comprises:
displaying a feedback interface for the resource, in response to a trigger operation on any one resource icon.

7. The method according to any one of claims 2 to 4, wherein, the method further comprises:
displaying an interface of user to be shared, in response to a second trigger operation of the object identifier; the second trigger operation being different from the first trigger operation;
pushing the video data of the target video to a client of a target user with whom to share, in response to a select operation on the target user with whom to share.

8. The method according to claim 4, wherein, the displaying a recommendation information of a target object based on a trigger operation of a comment control for the target video, in response to the target video satisfies a preset condition, comprises:
displaying the recommendation information of the target object based on the trigger operation of the comment control for the target video, in response to that the video data of the target video comprises the recommendation identifier.

9. An object recommending method applied to a server, the method comprising:
acquiring a recommendation information of a target object associated with a target video, in response to the target video satisfies a preset condition;
pushing a video data of the target video to a client; the video data of the target video comprising the recommendation information and a recommendation identifier, so that the client displays the recommendation information according to the recommendation identifier based on a trigger operation of a comment control for the target video when playing the target video; and the recommendation identifier being used for representing that the target video satisfies the preset condition.

10. The method according to claim 9, wherein, the method further comprises:
determining whether the target video satisfies the preset condition according to at least one of: a comment information, a title information, a video frame image information, and an audio information of the target video.

11. The method according to claim 10, wherein, the determining whether the target video satisfies the preset condition according to at least one of: a comment information, a title information, a video frame image information, and an audio information of the target video, comprises:
determining that the target video satisfies the preset condition, if: a comment information and/or a title information of the target video comprises a text information associated with the target object, a video frame of the target video comprises an image information corresponding to the target object, or an audio of the target video comprises an audio information corresponding to the target object.

12. An object recommending apparatus, comprising:
a playing module, configured to play a target video;
a display module, configured to display a recommendation information of a target object based on a trigger operation of a comment control for the target video, in response to that the target video satisfies a preset condition; the target object being an object associated with the target video.

13. An object recommending apparatus, comprising:
a processing module, configured to acquire a recommendation information of a target object associated with the target video, in response to that the target video satisfies a preset condition;
a push module, configured to push a video data of the target video to a client; the video data of the target video comprising the recommendation information and a recommendation identifier, so that the client displays the recommendation information according to the recommendation identifier based on a trigger operation of a comment control for the target video when playing the target video; and the recommendation identifier being used for representing that the target video satisfies the preset condition.

14. An electronic device, comprising: at least one processor and a memory, wherein:
the memory has computer execution instructions stored thereon; and
the at least one processor executes the computer execution instructions, to cause the at least one processor to execute the method according to any one of claims 1 to 11.

15. A computer readable storage medium, having computer execution instructions stored thereon, wherein, a processor, when executing the computer execution instructions, implements the method according to any one of claims 1 to 11.

16. A computer program product, comprising computer instructions, wherein, the computer instructions, when executed by a processor, implement the method according to any one of claims 1 to 11.

17. A computer program, wherein, the computer program, when executed by a processor, implements the method according to any one of claims 1 to 11.
